Europäisches Patentamt

European Patent Office

Office européen des brevets

(11) Publication number: **0 242 099**
**A2**

## (12) EUROPEAN PATENT APPLICATION

(21) Application number: 87302967.2

(22) Date of filing: 06.04.87

(51) Int. Cl.4: **G01S 5/14** , **G08B 13/24**

(30) Priority: 09.04.86 US 849827

(43) Date of publication of application:
21.10.87 Bulletin 87/43

(84) Designated Contracting States:
BE CH DE FR GB IT LI NL SE

(71) Applicant: **Advanced Strategics, Inc.**
**1555 North Astor**
**Chicago Illinois 60610(US)**

(72) Inventor: **Rapoport, Uri**
**425 South Harvey**
**Oak Park Illinois 60302(US)**

(74) Representative: MacGregor, Gordon et al
ERIC POTTER & CLARKSON 14 Oxford Street
Nottingham, NG1 5BP(GB)

(54) **Anti-theft and locating system.**

(57) A microprocessor monitors vehicle/personal position by way of coordinates obtained from Navstar Global Positioning System. Upon activation, through sensing unauthorized access to a vehicle or a change in its position, the microprocessor identifies itself to a central dispatch office and alerts the same to the nature of the disturbance. The system periodically updates vehicle location by way of digital signals sent to the central dispatch station by way of a cellular mobile telephone system. The central dispatch office can interrogate the microprocessor via the telephone link by addressing its unique serial number in order to obtain its position should the vehicle be stolen without activation of the micro-processor. A plurality of logic inputs and outputs are provided for accommodating conventional anti-vandalism and anti-theft detectors which may be integrated into the total protection system.

FIG. 1

EP 0 242 099 A2

## ANTI-THEFT AND LOCATING SYSTEM

DESCRIPTION

This invention relates to security devices, particularly to a device used to identify the position or location of a movable object, such as an automobile, appliance, painting, or even a child.

Major crime problems in the United States include the theft of valuable movable objects, such as automobiles and the like, and missing children. In general when taken, these objects do not leave a trail by which the object can be traced or tracked. Furthermore, the objects must be visually identified, which means that they may be hidden or their appearance altered to prevent retrieval.

In the past various protection systems have been provided to protect automobiles and other such items from theft. These systems have, in general, initiated an alarm, such as a siren or flashing light, to alert persons nearby of an unauthorized entry or movement of the item. Notwithstanding such alarm-type security systems, thefts and unauthorized takings have continued.

Other systems have been disclosed in which an electromagnetic signal, such as a radio signal, is sent from a vehicle which has been broken into to a special group of antennae located throughout an area, which then transmits the signal to a police station. Based on the proximity of the vehicle to an antenna, an approximation of the vehicle's position is made. However, such a system requires a special group of antennae to receive the signal and does not provide accurate information as to the specific location of the vehicle.

In other systems, the position of a vehicle is to be determined by use of a gyroscope and an odometer. See, for example, U.S. Patents No. 4,024,493 and 4,139,889, both fully incorporated herein by this reference. However, gyroscopes may drift so that directional accuracy may vary. Furthermore, reliance on the odometer may not be reliable since the wheels to which the odometer is connected can slip or the vehicle may be moved by towing without changing the odometer. Thus transmitted information as to the vehicle's location may be inaccurate.

U.S. Patents No. 3,644,883 and 3,718,887, both fully incorporated herein by this reference, disclose a system for tracking a vehicle, such as a bus, as it moves along a predetermined route. There, signpost receivers are provided along the route to receive signals from the bus and then relay those signals to a central station for determination of the bus's location. This again requires that individual signal-receiving signposts be mounted along a predetermined route.

Navigational satellite systems, sometimes referred to as global positioning systems (GPS systems), are used by the military to identify the position of land bases, ships, airplanes, vehicles, etc. For example, an airplane may receive a signal from a satellite system and then convert that signal into position identifying information.

The use of navigational satellites to identify the position of an automobile is disclosed in U.S. Patents No. 4,445,118 and 4,459,667, both fully incorporated herein by this reference. In 4,445,118, it is disclosed that a patrol car can determine its position using the United States Government's Navstar satellite system. Similarly in 4,459,667, a guidance system for an automotive vehicle is disclosed, which includes a dead reckoning system and the use of a navigational satellite system. However, this system only identifies the location of the vehicle to the vehicle occupants. Neither system disclosed in said patents provides a security system for use in locating and retrieving stolen vehicles or other items.

It is an object of this invention to provide a security system for signalling the unauthorized entry or taking of an object, such as a vehicle, and signalling the location of the object to a central or base station.

It is another object of this invention to utilize existing signal-carrying networks for communication between the vehicle, for example, and the central station.

It is yet another object of this invention to utilize the existing navigational satellite systems to determine the location of the vehicle.

Another object of this invention is to provide a security system which will issue a position-locating signal upon an unauthorized entry, use or taking of the vehicle or other item and as the vehicle moves.

These and other objects of this invention will become apparent from the following description and appended claims.

There is provided by this invention a system for precisely identifying the position of an object such as, but not limited to, a vehicle and advising a central station of such position. More specifically, a vehicle, for example, can include a receiver for receiving position signals from a navigational satellite and converting those signals into information as to the location of the vehicle.

A transmitter will then transmit the location information, via existing systems, such as the cellular telephone system to a central station for processing. Thus special signal detecting receivers, signposts, or the like, are not required and all components of the system may be standard off-the-shelf items.

Furthermore, the signal may be transmitted when there is an unauthorized entry or movement of the vehicle, which transmission can be initiated by various sensors that detect breakage, entry, etc. In addition, the owner of a vehicle can initiate transmission to update the system as to location, etc.

Displays can be provided within the vehicle for displaying the position of the vehicle on a map.

Moreover, communication links with the vehicle can be provided for the occupant to communicate various information to the central station or vice versa. For example, the central station could activate, within the vehicle, various alarms (silent or audible) or even vehicle disabling devices.

Other objects, features and advantages of the invention, its organization, construction and operation will be best understood from the following detailed description, taken in conjunction with the accompanying drawings, on which:

FIGURE I is a schematic representation of a safety system constructed in accordance with the present invention;

FIGURE 2 is a perspective view of the elements of Fig. I as they may appear in a physical form;

FIGURE 3 is a perspective view of a keypad which may be employed in practicing the present invention;

FIGURE 4 is a side view of a vehicle having a vehicle code door lock, as an alternative to and similar to the keypad of Fig. 3;

FIGURES 5a, 5b and 5c is a flow chart of system operation to output data from a vehicle in accordance with the present invention;

FIGURE 6 is a flow chart of the operation of the system with respect from a dispatch to the vehicle point of view;

FIGURE 7 is a flow chart for a first menu of Fig. 6;

FIGURE 8 is a flow chart for a second menu of Fig. 6;

FIGURE 9 is a flow chart for the receive mode of operation; and

FIGURE l0 is a flow chart for interrogation, by way of Navstar codes, for example, for finding vehicle location.

## ON THE DRAWINGS

Referring to Figs. I and 2, the anti-theft and locating system of the present invention is generally illustrated at l0 as comprising a vehicle l2, which is linked to a global positioning system l4, a cellular telephone system l6 and an authorization transmitter, hereinafter a personal transmitter, l8. As shown, the global positioning system may comprise a plurality of satellites 20, 22, 24, which provide timing and position data as provided, for example, by the Navstar system.

The cellular telephone system includes a plurality of cells, such as the cells 26, 28, each having transmitting and receiving equipment 30 connected to a mobile switching office 32. The mobile switching office, as is well known, is tied to a telephone exchange 34, which may establish connections between the mobile switching office 32 and a central security office, hereinafter a dispatch office, 36. The system techniques and details of operation of cellular systems are well known in the art and will not be discussed further herein, with exception of reference to function in the operation of the system between the vehicle l2 and the dispatch office 36.

The vehicle l2 is shown as comprising all of the elements necessary for the anti-theft and position locating features of the invention. The vehicle l2 is therefore seen as comprising, or more specifically having thereon or attached thereto, a plurality of antennae 38, 40, 42 and 44, which are respectively connected to a GPS receiver 46, a cellular mobile telephone transceiver 48, and a disarm receiver 50. As shown, the disarm receiver 50 disarms the vehicle portion of the system upon proper operation of the personal transmitter l8 which senses a user code to the disarm receiver by way of an antenna 52. As an alternative, the disarm receiver and the personal transmitter could operate on the basis of the well-known infrared techniques, such as employed in remote control of television sets, video cassette recorders and the like.

The apparatus in the vehicle is also seen as comprising a central processing unit (CPU) 54, a read only memory (ROM) 56, a random access memory (RAM) 58, a peripheral interface adapter (PIA) 60, a further peripheral interface adapter 62, and a modulator-demodulator (MODEM) 64, all interconnected by way of a data bus 66. The PIA 62 is also provided with logic outputs 68 and logic inputs 70 for the purposes set forth below.

3

The system is also provided with a power supply 72, including the vehicle power supply, and a back-up power supply for supplying all of the components.

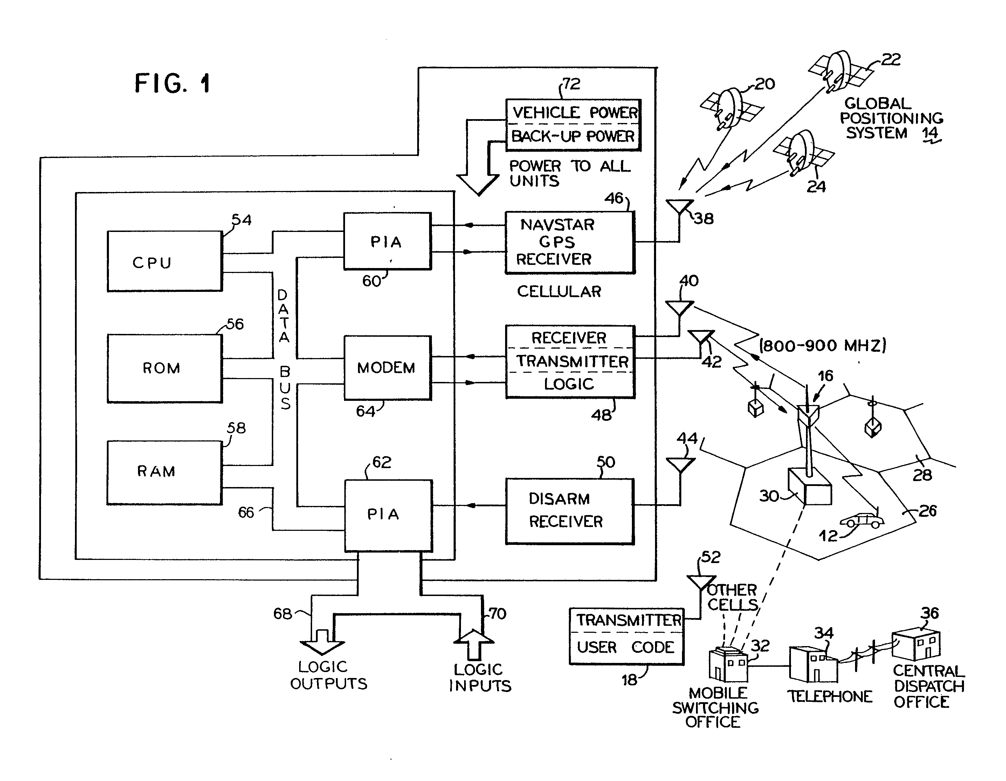

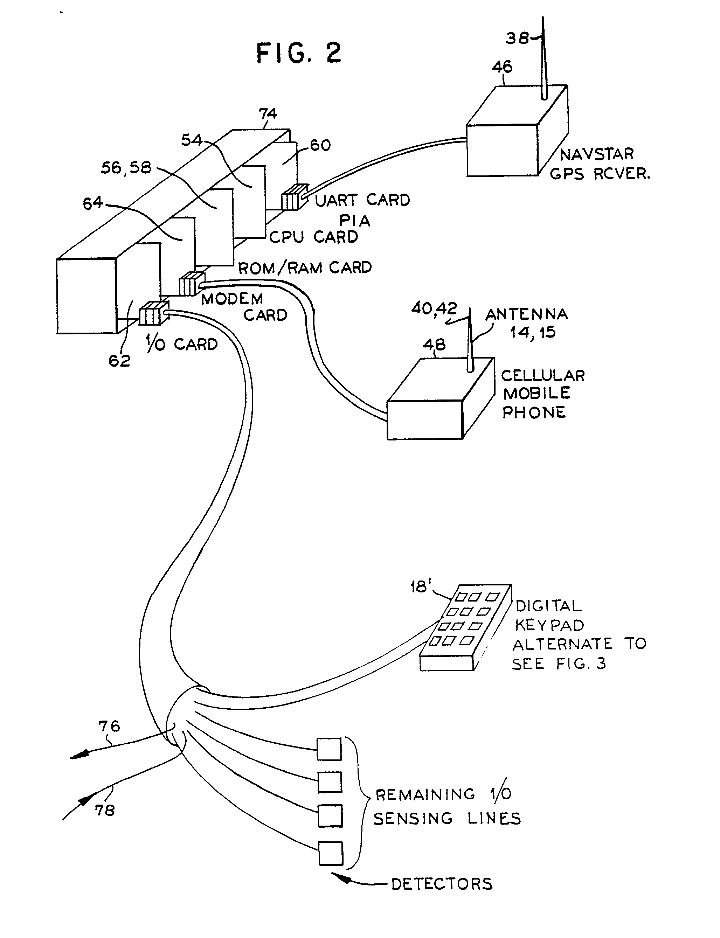

Fig. 2 illustrates one possibility of how the apparatus may be physically set up and interconnected. In addition, Fig. 2 illustrates a wired keypad l8' as the personal transmitter, which is connected by way of the logic inputs 70 to the PIA 62 to bypass or deactivate, as desired, the disarm receiver 50.

Also shown in Fig. 2 is an ignition disable line 76 and an ignition status line 78.

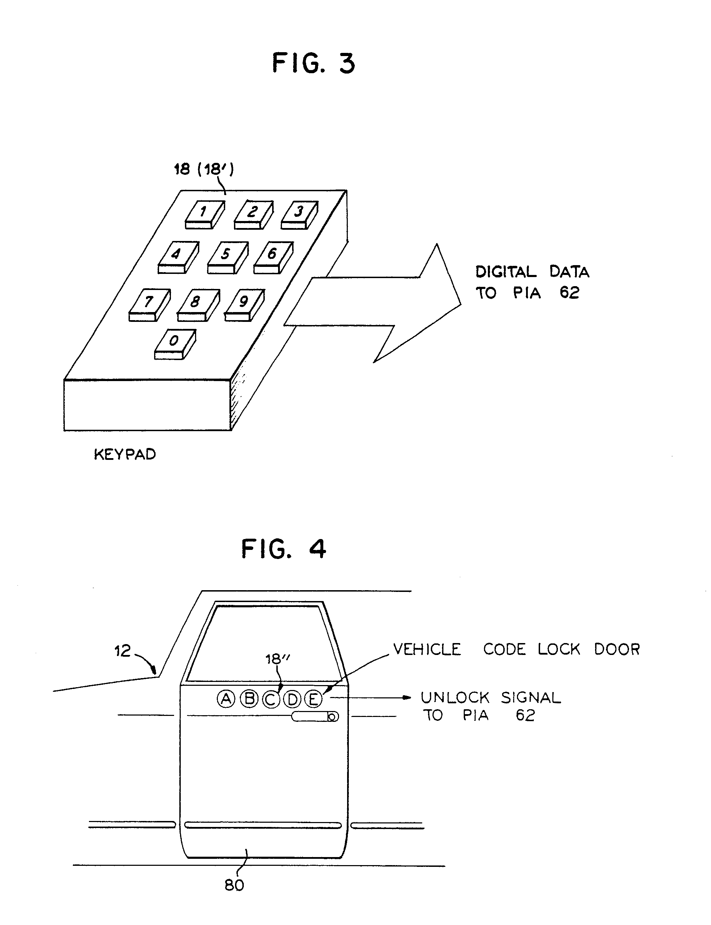

In Fig. 3, the keypad l8 (l8') is separately illustrated as a device for transmitting digital data to the PIA 62, either indirectly (via the disarm receiver 50) or directly (via the logic inputs 70).

In Fig. 4 a portion of the vehicle l2 is illustrated as comprising a door 80 having a coded door lock which may be unlocked by way of a keypad l8', which transmits an unlocked signal to the PIA 62 for, in turn, release of the lock.

As discussed above, all of the elements in or at the vehicle may be installed in a single package, which is perhaps located in the trunk of the vehicle with the antennae mounted at a suitable location or locations.

A conventional Navstar receiver provides ranging information from at least four GPS satellies (only three shown) and their ephemeris data to the microprocessor to compute vehicle position. Alternately, some Navstar receivers contain an internal microprocessor to compute vehicle position and provide data output in the form of a standard RS232 output to the data bus by way of the PIA 60.

In either case, the microprocessor (CPU 54) would be employed to ascertain vehicle status and alert a central dispatch station 36 of the vehicle condition and location through the duplex cellular mobile telephone link utilizing the MODEM 64. The microprocessor may be of conventional design, as set forth below, and comprise the CPU 54; the ROM 56, which stores the program instructions for carrying out programs of the type set forth below; the RAM 58, which stores intermediate results; and the MODEM 64, which is employed to couple data to and from the bus 66 and the cellular mobile telephone transceiver 48. In addition, it includes the PIA's 60, 62, respectively, for receiving data from the Navstar receiver 46 and auxiliary vehicle sensing and control.

In order to reduce power consumption, it is preferable that the CPU 54 be of complementary metaloxide-semiconductor (CMOS) construction. If, as mentioned above, the Navstar receiver 46 includes its own microprocessor, the CPU 54 could be an $8$ or $16$ bit processor; however, if all computations are to be performed by the CPU 54, a $16$ or $32$ bit processor would be required, such as the newer CMOS version of the $68000$, since the Navstar calculations require about l00K of $16$ bit memory.

The auxiliary logic inputs and outputs are employed to expand the microprocessor's active role in protecting the vehicle. These inputs/outputs 70, 68 can also be optically coupled or othewise clamped to further isolate the microprocessor against electrical transients which may be unintentionally, or even intentionally, induced. One of the inputs, the input 78 of Fig. 2, provides the ignition status to automatically lock-in the vehicle's present position data when the ignition is switched off. This activates the microprocessor watch-dog function and any unauthorized movement of the vehicle would alert the microprocessor 54 to call the central dispatch office 36 by way of the cellular mobile telephone data link. When activated, the microprocessor 54 would identify itself to the central dispatch office, furnish its location, the nature of distress, and periodically up-date its position based upon distance traveled and rate of travel.

Authorized movement of the vehicle is permitted by unlocking the microprocessor watch-dog function by pressing a button on the personal transmitter l8, which stores the user authorization code, and which transmits a digital code word to the disarm receiver 50, much in the same manner as a remote control garage opener. In the alternative, the watch-dog function would be unlocked by entering the user authorization code from an auxiliary keypad l8, l8'. The inputs 70 can also be connected to provide standard anti-vandalism functions to form a fully integrated vehicle protection system. For example. the inputs may be connected to motion/shock detectors to sense the forcing of locks, window breakage or the forcing open of the hood or trunk. They can comprise an audio window breakage detector, an internal ultrasonic motion detector or the like. In addition, an input can be connected to a standard vehicle battery current detector to alert the microprocessor of a door or trunk opening when an interior accessory light is activated. Other inputs can sense movement (i.e., change of position) of the vehicle. Each input would occupy a separable logic input of the PIA 62 and thus have a unique address to alert the microprocessor of the nature of disturbance and permit the proper alert to be issued to the central dispatch office.

Auxiliary digital outputs from the microprocessor are available to actively protect the vehicle and signal its condition or status (armed/unarmed) to the owner. One output, for example, may be made available to disable the vehicle starter. Another output will be available to disable the vehicle ignition system (lead 76 of Fig. 2) or, through similar outputs, to stop the vehicle by turning off the fuel supply, disabling the microprocessor-controlled carburetor of vehicle so equipped, or by applying the brake on microprocessor-assisted anti-skid braking systems.

An output may also be used, for example, in conjunction with the personal transmitter to flash the parking lights of the vehicle to acknowledge the microprocessor watch-dog function has received the proper access code and acknowledge disablement.

These combinations of functions form the active protection of the vehicle in which the microprocessor initiates a call to the central dispatch office with the nature of this disturbance and the assistance required by security personnel. In a similar manner, some of the digital inputs can be activated by the driver to request road assistance from the central dispatch office as may occur with respect to flat tires, engine trouble and the like, or the request may concern navigational assistance. In the latter case, verbal communications could be established with the central dispatch office by way of the cellular mobile telephone link. The mobile telephone therefore may not require a handset, although one may be provided.

An alternate mode of operation can be initiated over the duplex cellular mobile telephone system from the central dispatch office since each microprocessor 54 will be issued a unit serial number. Unlike the user programmable unlock entry code which is entered by the personal transmitter and which can be changed by the owner, the unit serial number is installed and resides only in the ROM 56. As a result, the central dispatch office can initiate a response from the microprocessor 54 by issuing the proper serial number over the cellular link. The microprocessor can then respond with the vehicle location in the case where the vehicle is stolen when the anti-theft function was disarmed or otherwise bypassed. This also provides the protection for the vehicle even if the user authorization access code were to be observed and entered by an unauthorized person.

Another response of the microprocessor is to initiate a self-diagnosis routine and respond to system check operation periodically and automatically. In addition, the microprocessor may be employed to aid in recovery of a stolen vehicle by activating the proper auxiliary output to stop the vehicle, as mentioned above, with respect to ignition, fuel, carburetion, brakes or the like, for example when the vehicle is being pursued by the police.

The above description embodies the basic concept and sets forth the structure for carrying out the invention of an active anti-theft device. It should therefore be noted that some protection be included to protect the main antennae. Preferably these antennae and the disarm receiver are designed as a single multi-band antenna. Since the Navstar signal is high (1575 mHz) and the cellular telephone network is also high (800-900 mHz), the antennae will be small, and it is therefore possible to install two antennae for redundancy. It is also possible to monitor the antennae impedance or their nearby stray capacitance to detect changes and automatically alert the central dispatch office of present location. Since the MODEM 64 establishes the data rate, and present data rates of 1200 bits/second are common, data transfer will occur in a fraction of a second once a clear channel is secured. Alternately, several antennae may be phased together using stripline techniques to construct a flat distributed antenna array and, for example, in a fiberglass rooftop or trunk lid, making destruction of the entire array highly unlikely.

It should also be noted that while the foregoing description has been geared to the Navstar system and the cellular mobile telephone system, alternate systems are also applicable. For example, the Navstar signals may be augmented to reduce or aid in computational power as proposed in the aforementioned U.S. 4,445,118, another involves the improved mobile cellular systems which are fully digital.

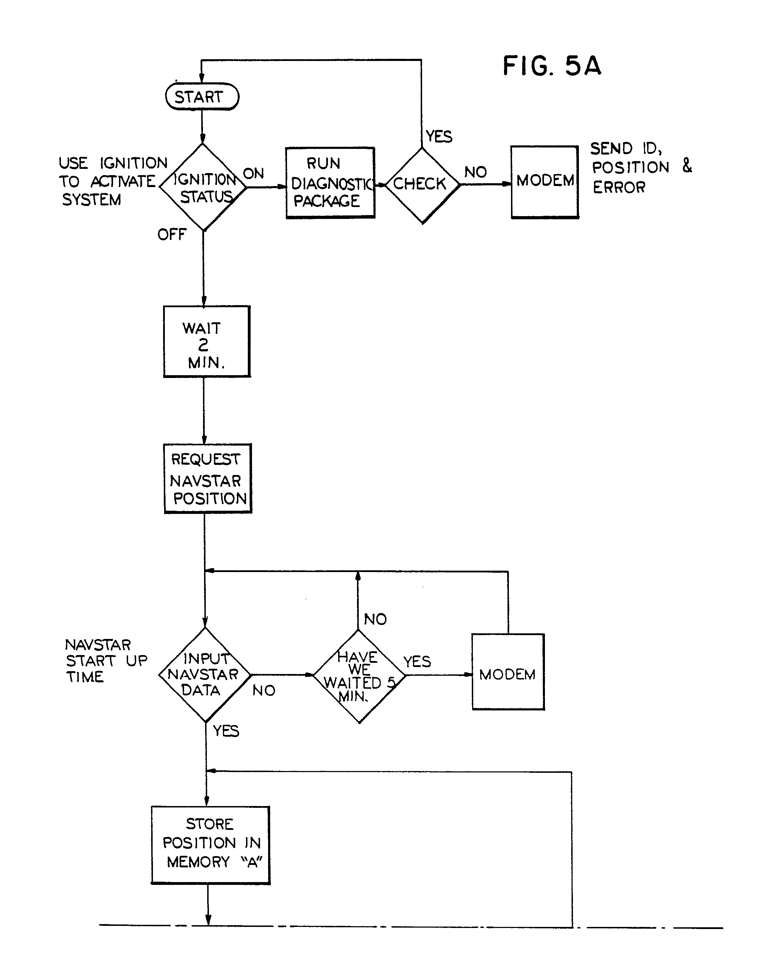

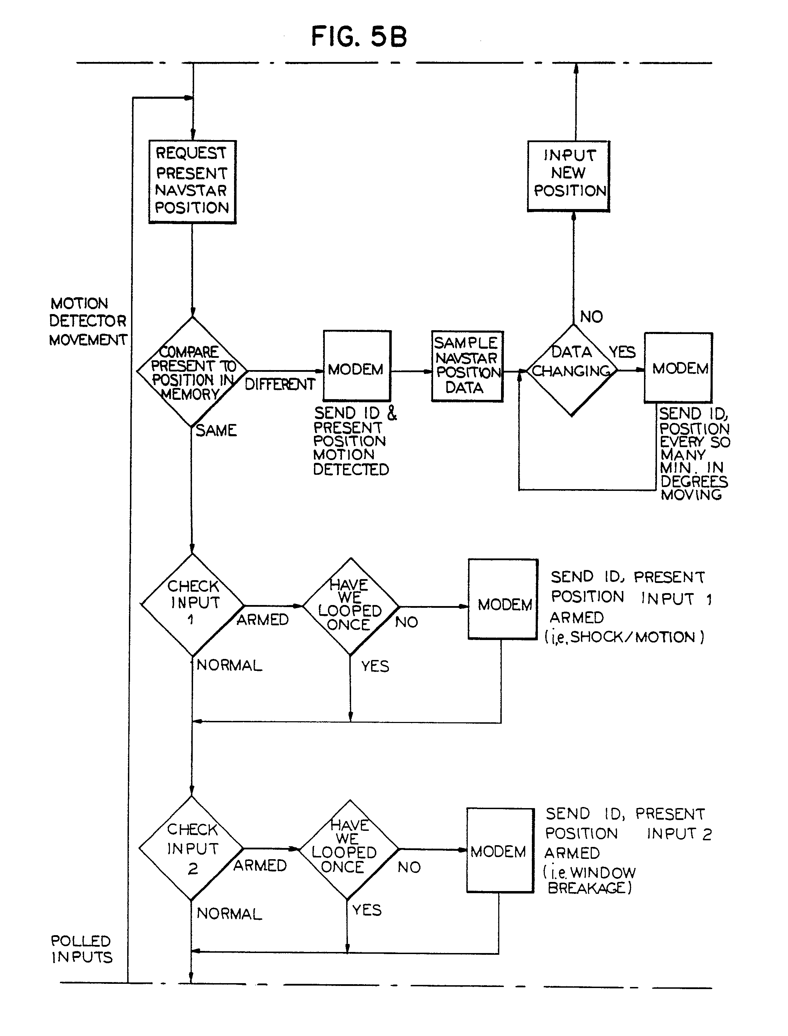

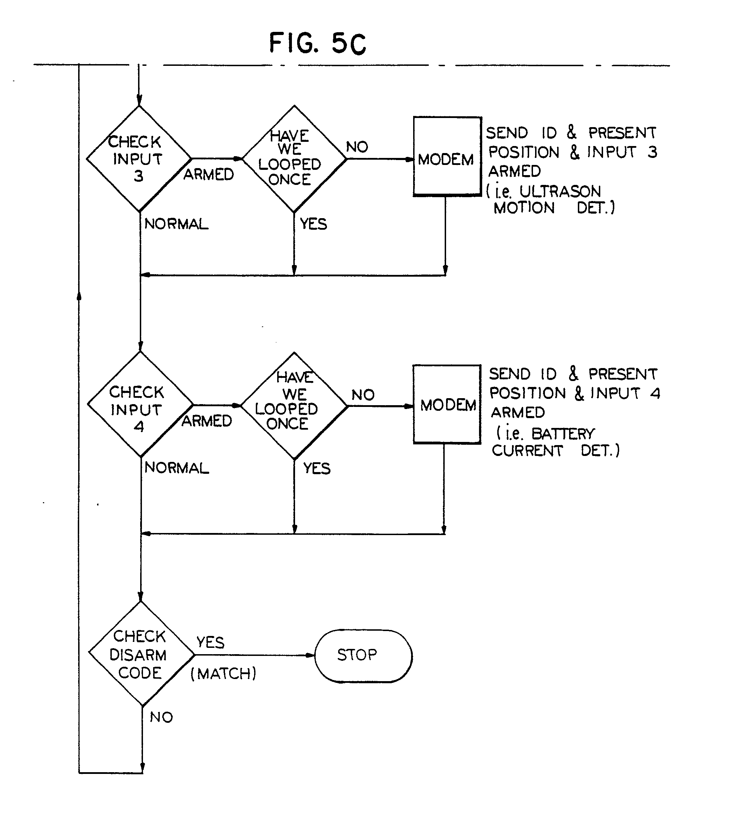

Turning to Fig. 5, a flow chart of operation with respect to the vehicle is illustrated, which is basically self-explanatory. The upper portion of Fig. 5 relates to the use of the ignition to activate the system. The following portion of the flow chart relates to the Navstar start-up time from the request for Navstar position to the storing of the position in the RAM 58. The next following portion of the flow chart relates to a detection of movement through repetitive transmission of the identification of the CPU 54 and the then present position of the vehicle. Each of the check loops also indicates the arm of individual anti-theft elements. Although only four check loops have been illustrated, many others could, of course, be employed, with the final result being a renewed position request to be calculated from the Navstar position information. An additional loop or loops may be provided to check if the system has been turned on or off. For example, one may dial into the system from home, for instance see the image from the dispatcher's terminal on his own terminal, for example, a map showing the vehicle's location.

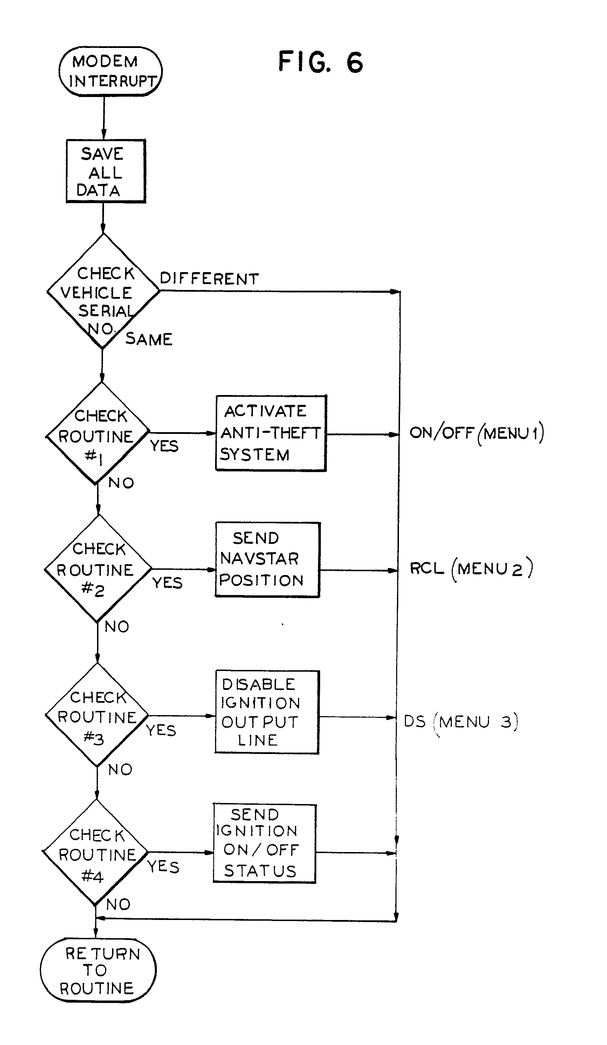

As further examples, reference is taken to Figs. 6-10. In Fig. 6, the first check concerns activation of the anti-theft system and is essentially an on/off menu, to wit:

MENU

1. Send signal to turn on or off
   the system in the vehicle          On/Off
2. Request vehicle location          RCL
3. Send disabling signal, i.e.,
   ignition                          DS
4. Send Navstar signal in the
   area                              NSA

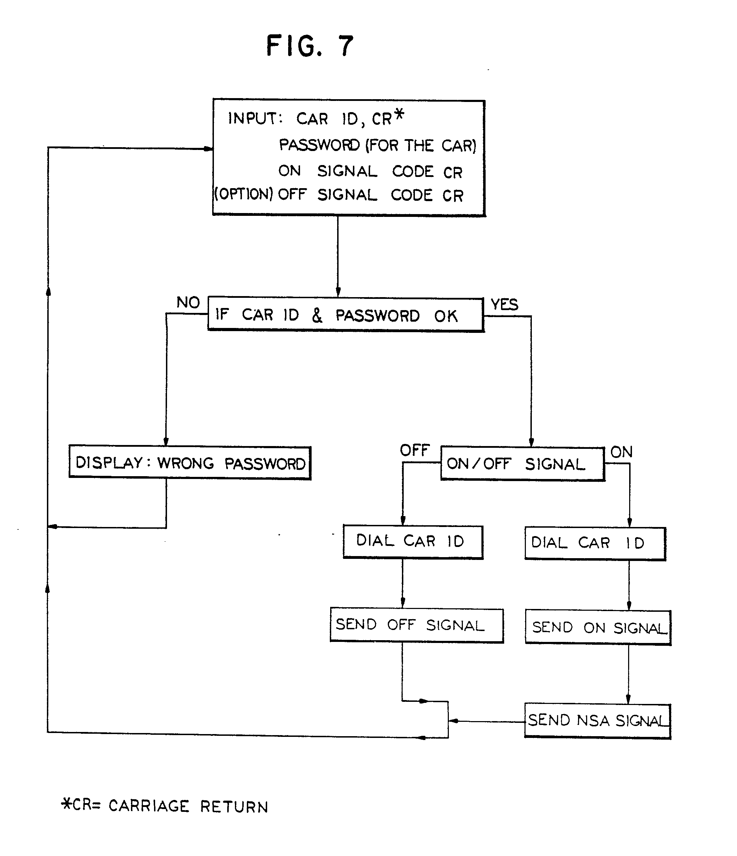

The flow chart for the above menu is illustrated in Fig. 7 in which the input is the vehicle identification code and the authorization code. If the vehicle and authorization codes are improper, an option is a display or a signal indicating a wrong code. If proper, however, the right-hand side of Fig. 7 applies.

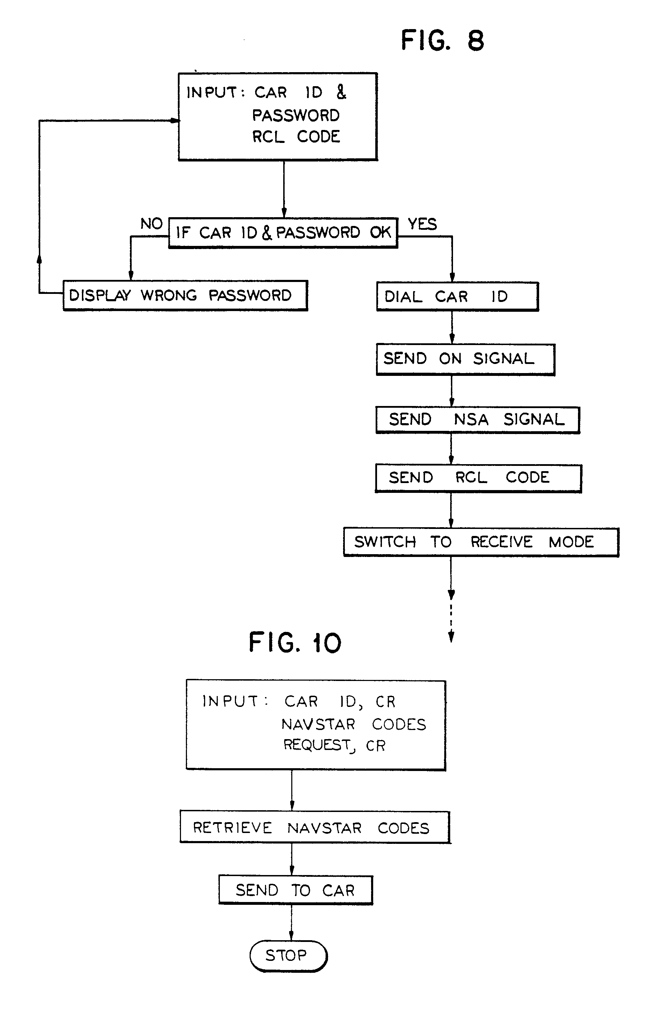

Fig. 8 illustrates a flow chart for a menu concerning the transmission of Navstar position signals and relates to the second route in Fig. 6. Here again, if the password is wrong, a display or indication is provided to loop back to the input. If the codes are correct, however, the vehicle identification is dialed, an on signal is transmitted, a Navstar signal is transmitted in the area, the RCL code for requesting vehicle location is transmitted and the system then switches to the receive mode.

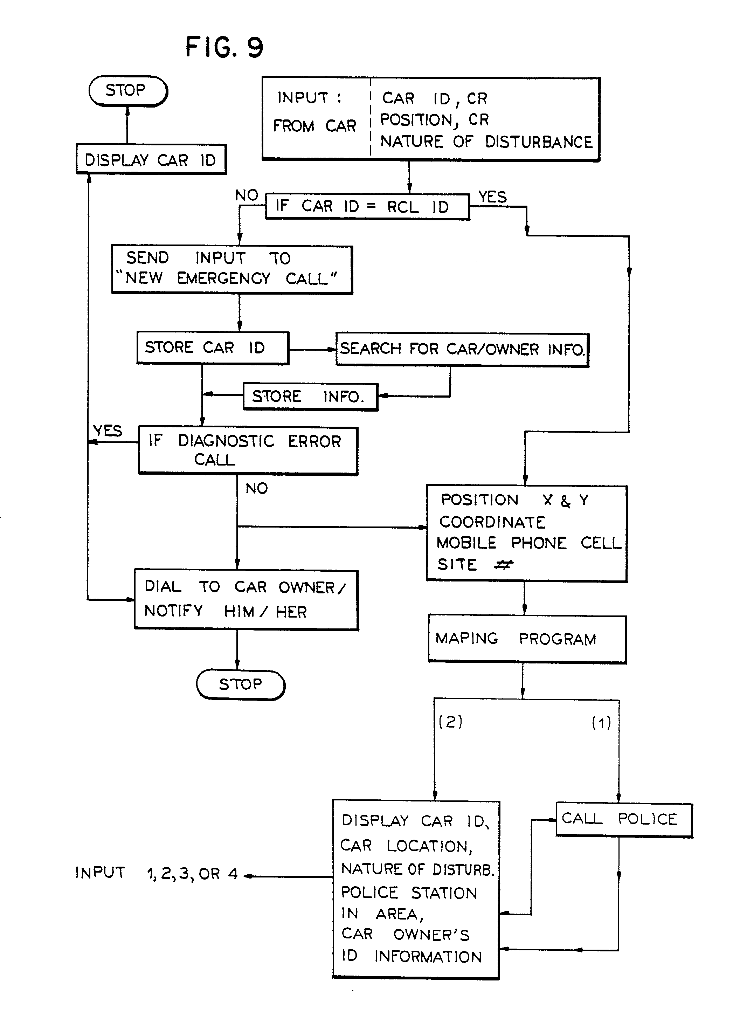

The receive mode is illustrated in the flow chart of Fig. 9. Here, the input is from the vehicle and concerns the vehicle identification, the position and the nature of the disturbance. If the vehicle identification and location codes correspond, the position thereof in Cartesian coordinates is provided to the mobile telephone system and activates a map program by way of which the authorities may be informed of vehicle location. On the other hand, the mapping program provides for a display of the vehicle identification from a location and nature of disturbance so that the authorities or service personnel may be notified.

If in the receive mode the identifications are not the same, the input may be sent a new emergency call and the vehicle identification may be stored for processing. This may include a search for the owner identification. This information is then questioned to determine if there is a diagnostic error, and if so, the vehicle identification is displayed. If not, the vehicle owner may be called for a notification and the position of the vehicl may be determined as mentioned above for activiation of the mapping program.

Fig. l0 is a flow chart for receiving requested Navstar codes. Here, the vehicle identification and the Navstar code requests are input in order to retrieve the Navstar codes which are transmitted to the vehicle.

Apparatus for carrying out the invention may be a new fully integrated structure or, as mentioned above, may be an integration of well-known off-the-shelf components. Components of which may serve the purpose for constructing the apparatus and practicing the present invention are set forth in the following - schedule.

SCHEDULE OF COMPONENTS

| Reference | DESIGNATION AND MANUFACTURER |
|---|---|
| 18',50 | Digital Key Switch, Radio Shack 49-535 |
| 46 | Navcore I$^{TM}$, Collins Industrial GPS Products, Rockwell International, Cedar Rapids, Iowa |
| 48 | Mobile Telephone, Radio Shack 17-1002 |

| 54 | CMOS STD Bus 80C85A CPU Card, 78C15, Pro-Log Corp., 2411 Garden Road, Monterey, California |
| 56,58 | CMOS STD Bus, 64 kByte RAM/EPROM Card 77C08, Pro-Log Corp. |
| 60 | CMOS STD Bus, Dual Uart Card 73C04, Pro-Log Corp. |
| 62 | CMOS STD Bus Input/Output Port Card 76C04, Pro-Log Corp. |
| 64 | STD-138-300/1200 Baud Modem Card, Micro Link, 14602 North U.S. Highway 31, Carmel, Indiana |
| 74 | STD Bus Card Rack, 8 Cards, BR08T, Pro-Log Corp. |

The software for implementing the system and the conversion of the codes to local map coordinates, including city street address and the like may be provided by Hunter Systems Company, Inc., 5775 E. Los Angeles Avenue, Suite l03, Simi Valley, California. The data processing using this software is preferably done at the dispatch station, although it can be done at the vehicle if so desired.

Although I have described my invention by reference to particular illustrative embodiments and modes of operation thereof, many changes and modifications of the invention may become apparent to those skilled in the art without departing from the spirit and scope of the invention. I therefore intend to include within the patent warranted hereon all such changes and modifications as may reasonably and properly be included within the scope of my contribution to the art.

## Claims

I. In a method for locating a vehicle, in which coded navigation signals are transmitted to the vehicle by at least one orbiting satellite, the improvement comprising the steps of:

receiving and converting the coded navigation signals into a coded vehicle location signal;

establishing a radio connection between the vehicle and a central station in response to an unauthorized access to the vehicle;

transmitting the vehicle location signal to the central station; and

decoding the coded vehicle location signal to determine the location of the vehicle.

2. The improved method of claim I, wherein the vehicle location decoding is done at the central station.

3. The improved method of claim I, wherein the steps of receiving and converting and the step of transmitting are cyclically repeated to update vehicle location.

4. The improved method of claim I, and further comprising the steps of:

storing a vehicle identity code, which is unique to the vehicle, at the vehicle; and

adding the vehicle identity code to the coded vehicle location signal for transmission therewith.

5. The improved method of claim I, and further comprising the step of disabling the vehicle in response to an unauthorized access to the vehicle.

6. A method of locating a vehicle which has a vehicle identify code stored therein, comprising the steps of:

monitoring at least one vehicle condition to detect unauthorized access to or movement of the vehicle;

activating a navigation receiver in response to detection of unauthorized access to receive a navigation code from at least one orbiting satellite and convert the same to a position code prescribing the location of the vehicle;

combining the vehicle identity code and the vehicle condition;

7

a further step of generating a coded signal representing the type of unauthorized access is performed;

the step of combining also includes combining the coded signal representing the type of unauthorized access with the vehicle identity code and the vehicle position code; and

the step of decoding is further defined as decoding the coded signal to determine vehicle identity, vehicle location and the type of unauthorized access;

position code to form a coded signal for transmission;

activating transmission means in the vehicle to automatically call and establish a communication link with a central station;

transmitting the coded signal to the central station over the transmission means and the communication link;

receiving the coded signal as the central station; and

decoding the coded signal to determine vehicle identity and vehicle location.

7. The method of claim 6, wherein said transmission means is a radio telephone instrument.

8. The method of claim 6, wherein the step of monitoring is further defined as monitoring a plurality of different vehicles.

9. The method of claim 6, wherein the steps of transmitting, receiving and decoding are cyclic to update vehicle location.

I0. The method of claim 6, and further comprising the steps of:

storing an authorized access code in the vehicle;

generating an access code to obtain access to the vehicle;

comparing the generated access code with the authorized access code; and

preventing transmission from the navigation receiver when the two access codes agree.

II. Apparatus for locating a vehicle, comprising:

a plurality of detectors on the vehicle, each monitoring for a different unauthorized access condition and generating a respective unauthorized access code;

a navigation receiver in the vehicle for receiving and converting a plurality of navigation codes into a vehicle position code;

a transmission means in the vehicle which may be activated to automatically call a central station;

storage means storing a vehicle identity code; and

control means connected to said detector, to said navigation receiver, to said transmission means and to said storage means, said control means operable in response to operation of a detector to activate said navigation receiver and said transmission means and to generate and provide to said radio telephone instrument a coded signal including the vehicle identity code, the vehicle position code and the unauthorized access code for transmission to the central station.

I2. The apparatus of claim II, wherein the transmission means is a radio telephone instrument.

I3. The apparatus of claim II, and further comprising decoding means at the central station for decoding the coded signal to determine vehicle identity, vehicle position and the type of unauthorized access.

I4. The apparatus of claim II, wherein said control means comprises timing means for controlling repetitive transmission of the coded signal and updating means for updating the coded signal with respect to the vehicle position code.

I5. The apparatus of claim II, wherein one of the detectors monitors door opening, and further comprising:

authorized access code means storing an authorized access code;

access code generating means operable to generate an access code; and

code comparison means connected to compare said generated and authorized access codes and connected to said control means to deactivate said control means and permit entry into the vehicle.

I6. Apparatus for locating a vehicle, comprising:

a plurality of detectors on the vehicle, each of said detectors monitoring for a respective unauthorized access to the vehicle and cause generation of a respective first code in response to an unauthorized access;

a navigation receiver in the vehicle for receiving navigation codes from a plurality of orbiting satellites and converting the navigation codes to a vehicle location second code;

transmission means in the vehicle which may be activated to automatically call a central station via a transmission link; and

a microcomputer comprising a microprocessor, memory means storing an operating program and for storing data for processing, bus means connecting said memory means and said microprocessor, and interface means connecting said bus means to said navigation receiver; to said transmission means and to said plurality of detectors, said microcomputer programmed to activate said navigation receiver and said transmission means and generate the respective unauthorized access code in response to operation of one of said detectors and to provide a coded signal including said first and second codes to said radio telephone instrument for transmission to the central station.

17. The apparatus of claim 16, wherein one of said detectors is a shock detector.

18. The apparatus of claim 16, wherein one of said detectors is a window breakage detector.

19. The apparatus of claim 16, wherein one of said detectors is a ultrasonic motion detector.

20. The apparatus of claim 16, wherein one of said detectors is a battery current detector.

21. The apparatus of claim 16, wherein one of said detectors is a movement detector for detecting a change in position of said vehicle.

22. The apparatus of claim 16, and further comprising key means comprising a keypad for generating access codes, an access code storage section storing an authorized access code, and access code receiving means for receiving and comparing the stored and generated access codes, said access code receiving means connected to said microcomputer to signal the microcomputer to prevent activation of said navigation receiver and said radio telephone instrument in response to agreement of the two access codes.

23. The apparatus of claim 22, wherein said keypad is mounted in a door of the vehicle and connected to said access code receiving means.

24. The apparatus of claim 22, wherein said keypad comprises an electromagnetic transmitter and said access code receiving means comprises an electromagnetic receiver.

25. An object locating system comprising:

a mobile telephone base station;

an object including first receiver means for receiving satellite transmitted signals including location signals defining object location;

an access transmitter operable to transmit an authorized access code to the object;

transmitter means at said object;

a central station for receiving messages;

access means at the object operable to produce a signal;

said transmitter means at said object including message forming means operable to form a message including the location of the object from the location signals; and

control means at said object for receiving the access code and the location signals and responsive to said signal and the lack of the access code to activate said transmitter means to transmit the message to said central station over said mobile telephone base station including the position of the object.

26. The object locating system of claim 25, wherein said control means comprises:

a first memory storing an operational program;

a second memory for storing position signals; and

a processor for forming messages in response to the program and the stored position signals.

## FIG. 1

VEHICLE POWER / BACK-UP POWER [72]

POWER TO ALL UNITS

GLOBAL POSITIONING SYSTEM 14

[20] [22] [24]

CPU [54]

ROM [56]

RAM [58]

DATA BUS

PIA [60]

MODEM [64]

PIA [62]

NAVSTAR GPS RECEIVER [46]

CELLULAR

RECEIVER / TRANSMITTER / LOGIC [48]

DISARM RECEIVER [50]

[38]

[40]

[42]

(800-900 MHZ)

[16]

[28]

[30]

[12]

[26]

[44]

[66]

[68] LOGIC OUTPUTS

[70] LOGIC INPUTS

TRANSMITTER / USER CODE [18]

[52] OTHER CELLS

MOBILE SWITCHING OFFICE [32]

TELEPHONE [34]

CENTRAL DISPATCH OFFICE [36]

0 242 099

# FIG. 2

38

46

NAVSTAR
GPS RCVER.

74

54

60

56,58

UART CARD

PIA

64

CPU CARD

ROM/RAM CARD

MODEM
CARD

40,42

ANTENNA
14,15

48

CELLULAR
MOBILE
PHONE

I/O CARD

62

18'

DIGITAL
KEYPAD
ALTERNATE TO
SEE FIG. 3

76

78

REMAINING I/O
SENSING LINES

DETECTORS

# FIG. 3

18 (18′)

DIGITAL DATA
TO PIA 62

KEYPAD

# FIG. 4

12

18″

VEHICLE CODE LOCK DOOR

Ⓐ Ⓑ Ⓒ Ⓓ Ⓔ

UNLOCK SIGNAL
TO PIA 62

80

FIG. 5A

USE IGNITION TO ACTIVATE SYSTEM

START

IGNITION STATUS — ON → RUN DIAGNOSTIC PACKAGE → CHECK — NO → MODEM → SEND ID, POSITION & ERROR

(CHECK — YES ↑)

OFF ↓

WAIT 2 MIN.

REQUEST NAVSTAR POSITION

NAVSTAR START UP TIME

INPUT NAVSTAR DATA — NO → HAVE WE WAITED 5 MIN. — YES → MODEM

(HAVE WE WAITED 5 MIN. — NO ↑)

INPUT NAVSTAR DATA — YES ↓

STORE POSITION IN MEMORY "A"

## FIG. 5B

MOTION DETECTOR MOVEMENT

REQUEST PRESENT NAVSTAR POSITION

COMPARE PRESENT TO POSITION IN MEMORY

DIFFERENT → MODEM — SEND ID & PRESENT POSITION MOTION DETECTED

SAME

SAMPLE NAVSTAR POSITION DATA

DATA CHANGING — NO → INPUT NEW POSITION

DATA CHANGING — YES → MODEM — SEND ID, POSITION EVERY SO MANY MIN. IN DEGREES MOVING

CHECK INPUT 1 — ARMED → HAVE WE LOOPED ONCE — NO → MODEM — SEND ID, PRESENT POSITION INPUT 1 ARMED (i.e. SHOCK/MOTION)

CHECK INPUT 1 — NORMAL

HAVE WE LOOPED ONCE — YES

CHECK INPUT 2 — ARMED → HAVE WE LOOPED ONCE — NO → MODEM — SEND ID, PRESENT POSITION INPUT 2 ARMED (i.e. WINDOW BREAKAGE)

CHECK INPUT 2 — NORMAL

HAVE WE LOOPED ONCE — YES

POLLED INPUTS

# FIG. 5C

```
CHECK
INPUT
3
    ──ARMED──  HAVE
               WE      ──NO──▶  MODEM   SEND ID & PRESENT
               LOOPED                   POSITION & INPUT 3
               ONCE                     ARMED
    NORMAL              YES             (i.e. ULTRASON
                                         MOTION  DET.)
```

```
CHECK
INPUT
4
    ──ARMED──  HAVE
               WE      ──NO──▶  MODEM   SEND ID & PRESENT
               LOOPED                   POSITION & INPUT 4
               ONCE                     ARMED
    NORMAL              YES             (i.e. BATTERY
                                         CURRENT  DET.)
```

```
CHECK
DISARM    ──YES──▶  STOP
CODE      (MATCH)

    NO
```

0 242 099

# FIG. 6

```
   ( MODEM
   INTERRUPT )
        |
        v
   +----------+
   |  SAVE    |
   |  ALL     |
   |  DATA    |
   +----------+
        |
        v
      /\
     /  \ CHECK      DIFFERENT
    < VEHICLE >------------------------------+
     \ SERIAL /                              |
      \ NO. /                                |
       \  / SAME                             |
        v                                    |
      /\                                      |
     /  \ CHECK       +-------------+         |
    < ROUTINE >--YES--| ACTIVATE    |-------- ON/OFF (MENU 1)
     \  #1  /         | ANTI-THEFT  |
      \  /            | SYSTEM      |
       \/ NO          +-------------+
        |
        v
      /\
     /  \ CHECK       +-------------+
    < ROUTINE >--YES--| SEND        |-------- RCL (MENU 2)
     \  #2  /         | NAVSTAR     |
      \  /            | POSITION    |
       \/ NO          +-------------+
        |
        v
      /\
     /  \ CHECK       +-------------+
    < ROUTINE >--YES--| DISABLE     |-------- DS (MENU 3)
     \  #3  /         | IGNITION    |
      \  /            | OUTPUT      |
       \/ NO          | LINE        |
        |             +-------------+
        v
      /\
     /  \ CHECK       +-------------+
    < ROUTINE >--YES--| SEND        |
     \  #4  /         | IGNITION    |
      \  /            | ON/OFF      |
       \/ NO          | STATUS      |
        |             +-------------+
        v
   ( RETURN
     TO
     ROUTINE )
```

# FIG. 7

```
┌─────────────────────────────────────┐
│ INPUT: CAR ID, CR*                   │
│        PASSWORD (FOR THE CAR)        │
│        ON  SIGNAL  CODE  CR          │
│ (OPTION) OFF SIGNAL  CODE  CR        │
└─────────────────────────────────────┘
```

NO ┌──────────────────────────┐ YES
   │ IF CAR ID & PASSWORD OK  │
   └──────────────────────────┘

┌──────────────────────────┐          OFF ┌─────────────────┐ ON
│ DISPLAY: WRONG PASSWORD   │              │ ON / OFF SIGNAL │
└──────────────────────────┘              └─────────────────┘

                    ┌──────────────┐      ┌──────────────┐
                    │ DIAL CAR ID  │      │ DIAL CAR ID  │
                    └──────────────┘      └──────────────┘

                    ┌────────────────┐    ┌────────────────┐
                    │ SEND OFF SIGNAL│    │ SEND ON SIGNAL │
                    └────────────────┘    └────────────────┘

                                          ┌────────────────┐
                                          │ SEND NSA SIGNAL│
                                          └────────────────┘

*CR= CARRIAGE RETURN

## FIG. 8

```
┌─────────────────────────┐
│ INPUT: CAR  ID  &       │
│         PASSWORD        │
│         RCL  CODE       │
└─────────────────────────┘
              │
              ▼
    ┌──────────────────────────────┐
 NO │ IF CAR ID & PASSWORD OK       │ YES
◄───┤                               ├────►
    └──────────────────────────────┘
```

DISPLAY WRONG PASSWORD

DIAL CAR ID

SEND ON SIGNAL

SEND NSA SIGNAL

SEND RCL CODE

SWITCH TO RECEIVE MODE

## FIG. 10

```
┌──────────────────────────┐
│ INPUT:  CAR  ID, CR      │
│          NAVSTAR  CODES  │
│          REQUEST, CR     │
└──────────────────────────┘
```

RETRIEVE NAVSTAR CODES

SEND TO CAR

STOP

# FIG. 9

INPUT: | CAR ID, CR
FROM CAR | POSITION, CR
| NATURE OF DISTURBANCE

STOP

DISPLAY CAR ID

NO ← IF CAR ID = RCL ID → YES

SEND INPUT TO
"NEW EMERGENCY CALL"

STORE CAR ID → SEARCH FOR CAR/OWNER INFO.

STORE INFO.

YES ← IF DIAGNOSTIC ERROR CALL

NO

POSITION X & Y
COORDINATE
MOBILE PHONE CELL
SITE #

DIAL TO CAR OWNER/
NOTIFY HIM/HER

STOP

MAPING PROGRAM

(2)          (1)

INPUT 1, 2, 3, OR 4 ←

DISPLAY CAR ID,
CAR LOCATION,
NATURE OF DISTURB.
POLICE STATION
IN AREA,
CAR OWNER'S
ID INFORMATION

CALL POLICE